(19) Europäisches Patentamt European Patent Office Office européen des brevets

(11) **EP 3 742 706 B1**

(12) **EUROPEAN PATENT SPECIFICATION**

(45) Date of publication and mention of the grant of the patent:
**06.09.2023 Bulletin 2023/36**

(21) Application number: **20175685.5**

(22) Date of filing: **20.05.2020**

(51) International Patent Classification (IPC):
*H04L 41/5009* (2022.01)   *H04L 67/101* (2022.01)
*H04L 65/80* (2022.01)   *H04N 21/222* (2011.01)
*H04L 65/612* (2022.01)   *H04N 21/24* (2011.01)
*H04N 21/647* (2011.01)   *H04H 60/29* (2008.01)

(52) Cooperative Patent Classification (CPC):
**H04L 41/5009; H04L 65/612; H04L 65/80;**
**H04L 67/101; H04N 21/222; H04N 21/2402;**
**H04N 21/64738;** H04H 60/29; H04L 41/509;
H04L 67/1004

(54) **CDN RANKING**

CDN-EINSTUFUNG

CLASSEMENT CDN

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.05.2019 IT 201900007038**

(43) Date of publication of application:
**25.11.2020 Bulletin 2020/48**

(73) Proprietor: **Sky Italia S.r.L.**
**20138 Milano (IT)**

(72) Inventors:
• **Ubertini, Gabriele**
**20138 Milano (IT)**
• **Vinci, Emanuele**
**20138 Milano (IT)**

(74) Representative: **Hoffmann Eitle**
**Patent- und Rechtsanwälte PartmbB**
**Arabellastraße 30**
**81925 München (DE)**

(56) References cited:
EP-A2- 2 027 536       CN-A- 108 270 828
US-A1- 2018 219 932   US-B1- 8 874 964

**Description**

BACKGROUND OF THE INVENTION

Systems and methods for delivering content to a user via a content distribution network (CDN) are known. Solutions for selecting one CDN among different available CDNs are likewise known.

CN108270828A discloses recommending content distribution network systems and a method comprising the steps of determining a plurality of content distribution network systems deployed by a multimedia website; in allusion to each content distribution network system, obtaining a real-time quality evaluation parameter set and a historical quality evaluation parameter set which reflect the content distribution network system; determining a service quality order of the plurality of content distribution network systems according to the respective real-time quality evaluation parameter sets and the historical quality evaluation parameter sets of the plurality of content distribution network systems; and determining a recommendation sequence of the content distribution network systems according to the service quality order of the plurality of content distribution network system so as to recommend the content distribution network systems based on the recommendation sequence. The scheme of the document is conducive to improving the video playing fluency, reduce the circumstance that the video cannot be loaded for a user terminal side and improve the video watching experience of users.

US8874964B1 discloses detecting a problem in content distribution. Performance information associated with a first content player is received form a first client. Performance information associated with a second content player is received from a second client. The information received from the first client and the second client is aggregated. A determination is made, from the aggregated information, that a problem is indicated.

EP2027536A2A relates to a peer-to-peer network operating in accordance with a service-oriented architecture. The peers request services from one another and each keep a record of the quality of service they receive from the other peers. The peers can operate in two modes of service provider selection. In a first mode, the selection is so as to favour service providers which have provided the peer with good service in the past. In a second mode, the selection is probabilistic and can therefore select service providers other than those that have provided good service in the past. Each device keeps track of the relative success of adopting the second mode of selection. By occasionally using the second mode of selection and adopting the second mode of selection more frequently should the relative success of adopting the second mode of selection rise, a more rapid adjustment by the network to changing network conditions is enabled.

However, the known solutions are not able to deliver content in a manner that is suited to the circumstances.

SUMMARY OF THE INVENTION

One of the objects of the present invention is to improve the prior art, or at least to remedy some of the problems present therein.

The object of the invention is achieved by the subjectmatter of the independent claims. Advantageous embodiments are defined in the dependent claims. Further examples are provided for facilitating the understanding of the invention.

According to a first example, a method for determining a rank index for a content distribution network, CDN, included in a system comprising a plurality of CDNs (CDN1 ... CDNk) and at least one aggregate of addresses associated with users (S1 ... Sq), the method comprising steps of:

- receiving (S110) telemetry data relating to one or more services delivered, in a given time interval ($\Delta t$), by means of each CDN of said plurality of CDNs (CDN1 ... CDNk) to users of said at least one aggregate of addresses (S1 ... Sq);
- determining (S120), based on said telemetry data, a set of CDN-aggregate performance indexes ($KPI.,.,\Delta t$) indicating a level of performance shown by a CDN in providing one or more services to users associated with an aggregate of addresses, for each combination of a CDN of said plurality of CDNs and said at least one aggregate of addresses;
- determining (S130), based on the set of CDN-aggregate performance indexes, a performance rank index ($KPI*k,q,\Delta t$) for a given CDN (CDNk) of said plurality of CDNs with respect to said at least one aggregate of addresses, said rank index indicating a rank level of the CDN-aggregate index of said predetermined CDN relative to the rank indexes of the CDN of said plurality of CDNs. In other words, step S120 determines, based on said telemetry data, a set of CDN-aggregate performance indexes ($KPI.,.,\Delta t$), wherein each CDN-aggregate performance index indicates a level of performance shown by a CDN in providing one or more services to users associated with an aggregate of addresses, and wherein the set of CDN-aggregate performance indexes comprises the CDN-aggregate performance indexes for each combination of a CDN of said plurality of CDNs and said at least one aggregate of addresses.

Preferably, in the method, said system comprises a plurality of aggregates of addresses, and wherein the step of determining a set of CDN-aggregate performance indexes (KPI.,.,$\Delta$t) comprises determining a set of CDN-aggregate performance indexes for each combination of a CDN of said plurality of CDNs and of each aggregate of said plurality of aggregates of addresses.

Preferably, the method further comprises determining said rank index comprises determining said rank index on the basis of the number of times a CDN-aggregate performance index for the given CDN indicates a better performance compared to the CDN-aggregate performance indexes of said set.

Preferably, in the method, determining said rank index comprises determining said rank index on the basis of the number of times the CDN-aggregate performance index is in a predetermined relationship with respect to each of the CDN-aggregate indexes of said set.

Preferably, the method further comprises determining a plurality of specific CDN-aggregate performance indexes (KPIi,.,$\Delta$t), each relating to a respective QoS parameter,

determining a plurality of specific rank indexes, each relating to a QoS parameter and on the basis of a respective specific performance index, and

determining the rank index (Index of formula 3.1) for the given CDN on the basis of said specific rank indexes.

Preferably, the method further comprises the step of:

- in response to a request to provide a service to a user belonging to an aggregate of addresses, selecting, among the CDNs suitable for providing services to said aggregate, a CDN having a higher performance index than other CDNs suitable for providing services to said aggregate of addresses.

Preferably, in the method, said at least one aggregate of addresses contains a number of addresses associated with respective users, wherein said number is preferably modifiable in correspondence with an event.

Preferably, the method further comprises the step of determining that a CDN of said plurality is in an inactive state in correspondence with an absence of respective telemetry data, and wherein the step of determining a rank index comprises determining a rank index for the CDN in an inactive state on the basis of a predetermined value, wherein the predetermined value preferably depends on the total number of CDNs of said plurality of CDNs.

Preferably, the method further comprises the step of determining a probability of assigning a CDN in an inactive state to a given aggregate of addresses based on a predetermined value, and of determining a probability of assigning each active CDN of said plurality of CDNs by distributing the remaining probability of assignment on the basis of the rank indexes of each active CDN of said plurality of CDNs, wherein a CDN is inactive in correspondence with an absence of respective telemetry data and active in correspondence with a presence of respective telemetry data.

Preferably, the method further comprises the step of assigning to the inactive CDN an assignment probability level equal to the lowest assignment probability among the active CDNs, and of recalculating the assignment probabilities for the active CDNs, except for the one having the lowest assignment probability, based on the remaining probability.

A computer program containing instructions which, when executed on a computer, cause the computer to execute the method according to any one of the examples of the method above.

An apparatus (400) for determining a rank index for a content distribution network, CDN, included in a system comprising a plurality of CDNs (CDN1 ... CDNk) and at least one aggregate of addresses associated with users (S1 ... Sq), the apparatus comprising:

- an interface (410) configured to receive telemetry data relating to services provided, in a given time interval ($\Delta$t), by means of each CDN of said plurality of CDNs (CDN1 ... CDNk) to users of said at least one aggregate of addresses (S1 ... Sq) ;
- a processor (420) configured to determine, based on said telemetry data, a set of CDN-aggregate performance indexes (KPI.,.,$\Delta$t) indicating a level of performance shown by a CDN in providing one or more services to users associated with an aggregate of addresses, for each combination of a CDN of said plurality of CDNs and said at least one aggregate of addresses;
- wherein the processor (420) is further configured to determine, based on the set of CDN-aggregate performance indexes, a performance rank index (KPI*k,q,$\Delta$t) for a given CDN (CDNk) of said plurality of CDNs with respect to said at least one aggregate of addresses, said rank index indicating a rank level of the CDN-aggregate index of said predetermined CDN relative to the CDN-aggregate indexes of said set.

Preferably, with reference to the apparatus, said system comprises a plurality of aggregates of addresses, and wherein the processor is further configured to determine a set of CDN-aggregate performance indexes for each combination of a CDN of said plurality of CDNs and of each aggregate of said plurality of aggregates of addresses.

Preferably, in the apparatus, the processor is further configured to determine said rank index on the basis of the number of times a CDN-aggregate performance index for the given CDN indicates a better performance compared to CDN-aggregate performance indexes of said set.

Preferably, in the apparatus, the processor is further configured to determine said rank index on the basis of the number of times the CDN-aggregate performance index is in a predetermined relationship with respect to each of the CDN-aggregate indexes of said set.

Preferably, in the apparatus, the processor is further configured to determine a plurality of specific CDN-aggregate performance indexes (KPIi,.,$\Delta$t), each relating to a respective QoS parameter,

> determine a plurality of specific rank indexes, each relating to a QoS parameter and on the basis of a respective specific performance index, and
> determine the rank index (Index of formula 3.1) for the given CDN on the basis of said specific rank indexes.

Preferably, in the apparatus, the processor is further configured to:
in response to a request to provide a service to a user belonging to an aggregate of addresses, select, among the CDNs suitable for providing services to said aggregate, a CDN having a higher performance index than other CDNs suitable for providing services to said aggregate of addresses.

Preferably, in the apparatus, said at least one aggregate of addresses contains a number of addresses associated with respective users, wherein said number is preferably modifiable in correspondence with an event.

Preferably, in the apparatus, the processor is further configured to determine that a CDN of said plurality is in an inactive state in correspondence with an absence of respective telemetry data, and to determine a rank index for the CDN in an inactive state on the basis of a predetermined value, wherein this predetermined value preferably depends on the total number of CDNs of said plurality of CDNs.

Preferably, in the apparatus, the processor is further configured to determine a probability of assigning a CDN in an inactive state to a given aggregate of addresses based on a predetermined value, and to determine a probability of assigning each active CDN of said plurality of CDNs by distributing the remaining probability of assignment based on the rank indexes of each active CDN of said plurality of CDNs, wherein a CDN is inactive in correspondence with an absence of respective telemetry data and active in correspondence with a presence of respective telemetry data.

Preferably, in the apparatus, the processor is further configured to assign to the inactive CDN an assignment probability level equal to the lowest assignment probability among the active CDNs, and to recalculate the assignment probabilities for the active CDNs, except for the one having the lowest assignment probability, based on the remaining probability.

Preferably, a system comprises an apparatus for determining a rank index according to one of examples A12 to A21, and an apparatus for collecting telemetry data.

LIST OF FIGURES

> Figure 1 is a block diagram of a system to which the present invention can be applied;
> Figure 2 is a block diagram of a method according to one embodiment of the present invention;
> Figure 3 is a block diagram of a computer capable of executing a program according to one embodiment of the present invention;
> Figure 4 is a block diagram of an apparatus according to the embodiment of the present invention;
> Figure 5a represents time windows used in determining the rank indexes;
> Figure 5b represents time windows used in a specific example of CDN allocation according to the present invention.

DETAILED DESCRIPTION

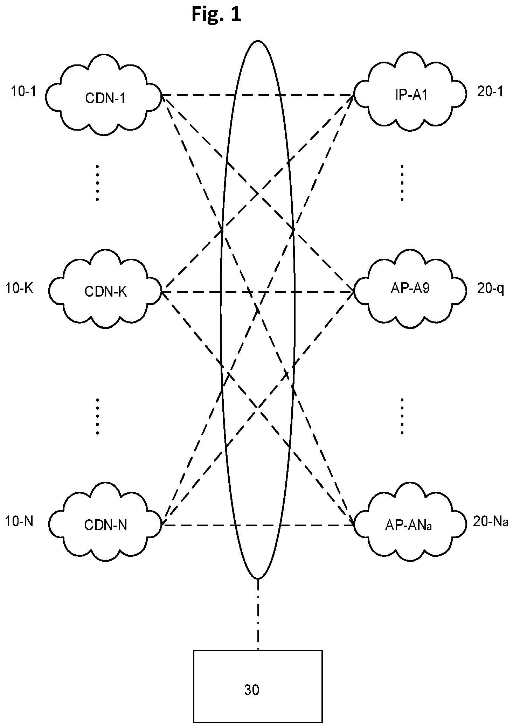

A system to which what is described herein can be applied is illustrated by way of example in figure 1, which represents various content distribution networks CDN-1 (10-1), ..., CDN-k (10-k), ...CDN-N (10-N), and various aggregates of addresses IP-A1 (20-1), ..., IP-Aq (20-q), ..., IP-Ana (20-Na). Each aggregate of addresses represents a set of addresses associated with respective users, for example IP addresses through which each user can communicate on the Internet. The IP addresses and the Internet are only illustrative examples, as what is described can in fact be equally applied to other types of addresses or other types of communication networks. Furthermore, any type of CDN can be used, as known to the person skilled in the art. Each CDN can be capable of delivering one or more services to any user present in any of the aggregates of addresses. Similarly, each user belonging to one of the aggregates can receive one or more services from any of the CDNs illustrated. If, for example, a user requests a new service, it is provided by means of the CDN that is selected among the plurality of CDNs. The system in figure 1 also comprises a monitor apparatus 30 capable of collecting telemetry data relating to the services received by one or more users, and delivered for example via one of the CDNs illustrated. The telemetry data are preferably telemetry data picked up in the CDN in relation to services provided to a given aggregate of addresses (in other words, they are not telemetry data provided or picked up by users, but rather picked up in the CDN). It may be observed that the addresses or aggregates of addresses discussed herein are different from other parameters such as ASNs (autonomous system numbers), since the latter solely provide a code identifying how some parts of the network are divided and administered, whereas the addresses and/or groups (aggregates) of IP addresses are directly representative of users and/or groups of users that are connected. In particular, an aggregate of addresses represents a group of addresses of a network, and thus not all the addresses of that network; in the event that the network is represented by a CDN, the aggregate therefore represents a group (subset) of all the addresses to which that CDN distributes content.

In such a system, however, it is difficult to make an automatic allocation of a CDN to a user in such a way as to maximise the quality perceived by the user (quality of experience), and/or to do so in real time, that is, taking into account the conditions of service quality currently present in the network, and/or to do so in a predictive manner.

Based on the considerations of the inventors, the solution proposed makes it possible, among other things, to optimise the distribution of content to each user in real time, also taking account of the quality of delivery of the service itself, thus increasing the probability of providing services with a high quality perceived by the user. As illustrated further below in detail, the solution envisages collecting telemetry data relating to the provision of services and, on the basis of these data, calculating a rank index for each CDN with respect to an aggregate of addresses. The rank index can be calculated for different CDNs with respect to a same aggregate. The rank index of a certain CDN thus indicates an expected or predicted level of service provision by that certain CDN to that aggregate of addresses. Therefore, if a user requests a new service, it will be possible to select a CDN based on rank indicators among different CDNs capable of serving an aggregate of addresses to which the user belongs; for example, the CDN having a higher rank index among all of the CDNs capable of serving the same user can be selected. Similarly, the allocation of a CDN can be modified over time, when, for example, the rank indexes are recalculated on the basis of updated telemetry data. On the basis of this rank indicator, it is optionally also possible to establish how many users or what percentage of users (clients) will be allocated to the CDN in proportion to the value of the rank index. Furthermore, again rationally, it is possible to take account of active or inactive CDNs in the process of allocating the client to a CDN, where inactive CDN means a CDN for which updated telemetry data are not available (sufficient).

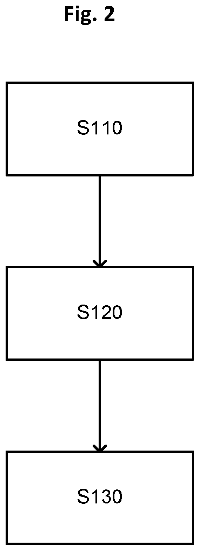

With reference to figure 2, one embodiment relating to a method for determining a rank index for a content distribution network (CDN) included in a system comprising a plurality of CDNs and at least one aggregate of addresses associated with users will now be described. An example of this system is illustrated in figure 1, in the particular case in which there is a single aggregate of addresses. This is in fact the general case in which the rank indexes are calculated for a plurality of CDNs (CDN-1 ... CDN-k, ...) with respect to a same aggregate (IP-q), for example in the case where the ranks are meant to be used for determining the allocation of one or more users belonging to that aggregate.

In a step S110 of this method, telemetry data are collected which relate to one or more services delivered, in a given time interval $\Delta t$, by means of each CDN of the plurality of CDNs to one or more users of at least one aggregate of addresses 10-Aq. Service means one among or a combination of audio, video and/or data services; therefore, the service allows the user to enjoy audio and/or video and/or data-based content (for example content provided by an application). The given time interval is a time interval during which the telemetry data relating to the provision of services during the same interval are collected. The given time interval $\Delta t$ is preferably a time interval adjacent to the instant of time at which the rank indexes are determined (for the sake of simplicity, calculation instant); adjacent means that the given interval ends at the calculation instant, or is separated from the latter by a given delay interval $\Delta d$ determined on the basis of the time necessary for measurements and/or for collecting and/or sending the data. With reference to the time interval $\Delta t$ or $\Delta d$, given means that it can be fixed once and for all, modified according to need, and/or modified dynamically, e.g. according to the network conditions, the telemetry measurement system, etc. In other words, it can be said that the interval $\Delta t$ is attached to or near the calculation instant. The temporal nearness or adjacency of the telemetry data to the calculation instant ensures that the rank of the CDN can be obtained substantially in real time, thus increasing the quality delivered to the user. Telemetry data means any type of data relating to the measurement of quality parameters tied to the provision of one or more services by a CDN to one or more users. Examples of such telemetry data, which will also be provided further below, are represented for example by any one or a combination of bitrates, available network bandwidth, number of errors, total rebuffering time, number of rebuffering events, etc. The telemetry data can be received by any system or apparatus capable of collecting them, as known in the art, where the device 30 in figure one represents solely an example.

In step S120, based on the telemetry data received, a set of CDN-aggregate performance indexes is determined which indicates a level of performance shown by a certain CDN in providing one or more services to one or more users associated with a certain aggregate of addresses. Therefore, "CDN-aggregate" means that the performance index relates, for example, to a CDN k and to an aggregate of addresses q. The set of performance indexes determined in step S120 thus contains the performance indexes with respect to the aggregate of addresses k for each of the CDNs that are capable of serving the aggregate k.

In step S130, based on the set of CDN-aggregate performance indexes determined, for example, in step S120, a performance rank index is determined for a given CDN (CDN-k) with respect to an aggregate of services IP-q. The rank index thus indicates a rank level (ranking, or priority, or classification level) of a predetermined CDN k relative to the rank indexes of other CDNs capable of serving the same aggregate q. The rank can be calculated for one or more of the CDNs of the plurality of CDNs, and not necessarily for all the CDNs of the plurality and not necessarily for all the CDNs that serve an aggregate.

In other words, the performance index is an indication tied to the telemetry data, whereas the rank index of a CDN k is a relative index, in that it indicates the quality delivered by the CDN k to the aggregate q relative to the other indexes (performance indexes, but also rank indexes, as the latter depend on the performance index) of the other CDNs capable of serving the same aggregate q. The rank index can be determined on the basis of a single metric and/or respective performance index, or on the basis of a combination of several metrics and/or performance indexes, as is evident, and will also be illustrated further below with reference to examples.

Therefore, thanks to the rank index, it is possible to simply determine at any instant in time which CDN is capable of most reliably providing a service to a user belonging to a certain aggregate, among multiple CDNs capable of serving the same aggregate (and therefore the same user). It is noted that the solution takes the addresses, and the telemetry data relating to the addresses, directly into consideration, so that it is possible to take into consideration the actual conditions of quality of delivery of a service. In this manner it is possible, for example, to select the CDN that is most appropriate at the moment of starting delivery of a service, or selecting a different CDN during the delivery of a service should another CDN come to be in the conditions for a better delivery of the service.

Optionally, the method according to the present embodiment can also be applied to a system in which there exists a plurality of aggregates of addresses 20-1 ... 20-q ... 20-Na. In such a case, the step of determining a set of CDN-aggregate performance indexes comprises determining a set of CDN-aggregate performance indexes for each combination of a CDN of the plurality of CDNs and of each aggregate of the plurality of aggregates of addresses. In symbols, the set of performance indexes will count the performance indexes for all of the pairs (CDNi, IP-Aj), wherein i and j each represent the CDN and the aggregates respectively included in the system. Accordingly, the rank indexes for each of these pairs can be determined; furthermore, in calculating the rank index of all the CDNs in relation to a single aggregate (in symbols, calculating the performance indexes for (CDN, IP-Aq) means all the CDNs that can serve the aggregate of IP addresses-Aq), all the performance indexes also of aggregates other than those to which the rank index refers can also be taken into consideration. It is noted, in fact, that although the method works by calculating the indexes of all the CDNs with respect to a single aggregate (as illustrated with reference to figure 2), it has been observed that it can be advantageous to calculate the rank index for a CDN in relation to the aggregate q also taking account of the performance indexes of all the pairs (CDNi, IP-Aj), i.e. taking into consideration the performance indexes in relation to aggregates other than the aggregate q. In fact, the inventors have found that calculating the rank index in relation to an aggregate q taking account of all the CDN-aggregate combinations leads to a more complete representation of the network in a certain moment, and therefore a better allocation or reallocation of new clients. In other words, though it could be sufficient to consider only the behaviour of all the CDNs towards the set of addresses to which a user belongs, also considering other addresses helps to represent the network better, and possible indirect conditioning of other IP aggregates other than the aggregate to which the user belongs.

Optionally, in the method according to the present embodiment, determining the rank index comprises determining the rank index on the basis of the number of times a CDN-aggregate performance index for the given CDN indicates a better performance compared to the CDN-aggregate performance indexes of said set. In this manner, it is possible to calculate a rank index relying on simple counting operations, convenient to obtain also in real time. Optionally, the count can be compared against the total number of CDNs serving an aggregate, or all the valid CDN-aggregate combinations in the system. In this manner, one is able to easily obtain a normalised index.

Optionally, in the method according to the present embodiment, determining the rank index comprises determining the rank index on the basis of the number of times the performance index for a pair, for example CDN k - aggregate q, is in a predetermined relation (expressed, for example, in mathematical terms, or in terms of the magnitude of the respective values) with respect to each of the CDN-aggregate indexes of said set. As illustrated further below, for example, a determination is made of the number of times in which a parameter, such as, for example, the bitrate of a CDN k towards an aggregate q, is greater than the bitrates shown by the other CDN-aggregate combinations. Similarly, or also in combination, a determination can be made of the number of times in which a parameter, such as, for example, the rebuffering time of the CDN k - aggregate q pair, is less than the rebuffering time of the other CDN-aggregate pairs (or greater, if the inverse of those values is used).

Optionally, the method of the first embodiment can comprise: determining a plurality of specific CDN-aggregate performance indexes ($KPI_{i,.,\Delta t}$), each relating to a respective QoS parameter; determining a plurality of specific rank indexes, each relating to a QoS parameter (quality of service, e.g. bitrate, rebuffering, etc.; see also the examples provided further below), and based on a respective specific performance index; determining the rank index (see also the formula 1.1 in the example further below) for the given CDN on the basis of said specific rank indexes. In other words, it is possible to obtain a rank index on the basis of specific rank indexes, each obtained on the basis of a respective specific performance index. In still other words, the granularity of the method can be increased by combining together different QoS factors, optionally suitably weighted.

Optionally, the method according to the first embodiment can comprise the step of, in response to a request to provide a service to a user belonging to an aggregate of addresses, selecting, from among the CDNs suitable for providing services to said aggregate, a CDN having a higher rank index than the other CDNs (or, in other words, higher compared to the respective performance ranks of other CDNs) that can serve the same aggregate.

Optionally, in the method according to the first embodiment, an aggregate of addresses with respect to which the degree of performance is determined comprises a number of addresses associated with respective users, wherein this number is preferably modifiable in correspondence with an event. The event can be represented, for example, by a predetermined instant in time, and/or by an instant in correspondence with a given interval, and/or by a command, for example from a network management device. In another example, alternatively or in combination, the event can be represented by the fact that addresses comprised in the aggregate start to manifest quality parameters differing greatly from one another; in this case, it could be preferable to divide the addresses of the aggregate into two or more new aggregates of addresses in order to increase the level of granularity with which the rankings are determined (where one of the new aggregates could be the original one, but with a reduced number of addresses; the excess addresses could therefore be distributed into new aggregates). Similarly, addresses of two or more pre-existing aggregates could be grouped together in a new aggregate (or in one of the pre-existing aggregates), for example when the individual addresses present in the various pre-existing aggregates show similar or identical quality. This therefore allows the granularity of the system to be adjusted in relation to the complexity of calculation, thus optimising the quality provided to users.

Optionally, the method according to the first embodiment can comprise the further step of determining that a CDN is in an inactive state in correspondence with an absence of respective telemetry data, for example because of a malfunction or the fact that the collection of telemetric data is not envisaged for that CDN. In this case, the step of determining a rank index comprises determining a rank index for the CDN in an inactive state on the basis of a predetermined value. The predetermined value can preferably depend on the total number of CDNs of said plurality of CDNs, or it can be a value established on the basis of statistical models, and/or on the basis of historical telemetry data. In this manner, it is possible to ensure that new users continue to be assigned to the inactive CDN (but only from a telemetric viewpoint); the predetermined value can therefore enable the continuous exploitation of the inactive CDN, and be selected so as not to overload it in view of the fact that it is not possible at the moment to monitor its operating conditions and load. Furthermore, alternatively or in combination, the predetermined value can preferably depend on the total number of CDNs of the plurality of CDNs, as will also be illustrated in an example further below.

Optionally, the method according to the first embodiment can comprise the step of determining a probability of assigning a CDN in an inactive state to a given aggregate of addresses based on a predetermined value, and of determining a probability of assigning each active CDN to a respective aggregate of addresses by distributing the remaining probability of assignment based on the rank indexes of each active CDN. As noted earlier, a CDN is inactive in correspondence with an absence of respective telemetry data, and active in correspondence with a presence of respective telemetry data. In this manner, the users can be appropriately balanced even if telemetric data are not available for one or more CDNs; regarding the probability value to be assigned to the inactive CDN, what was illustrated above applies. Remaining probability means the difference between the value 1 and the probability assigned to one or more inactive CDNs.

Optionally, the method according to the first embodiment comprises the step of assigning to the inactive CDN an assignment probability level equal to the lowest assignment probability among the active CDNs, and of recalculating the assignment probabilities for the active CDNs, except for the one having the lowest assignment probability, based on the remaining probability.

Optionally, the method according to the first embodiment comprises determining a probability of assigning new users to a CDN based on the priority ranking (for example, the inverse of the rank, optionally using correction factors, or calculating an average of its rank index relative to all the rank indexes of all the other active CDNs), therefore of assigning to an inactive CDN the lowest probability of assignment among the active CDNs. At this point, this variant envisages redetermining the probability of assignment for the remaining active CDNs (that is, excluding the CDN having the lowest probability) based on the remaining probability, for example by once again using the rank indexes. The method according to this variant can be iterated if necessary, for example if a lower probability than originally calculated results from the redistribution of properties.

It shall be observed that what was illustrated above regarding the method or the variants thereof also applies for the other embodiments or examples described in the present description; the considerations set forth above will thus not be repeated.

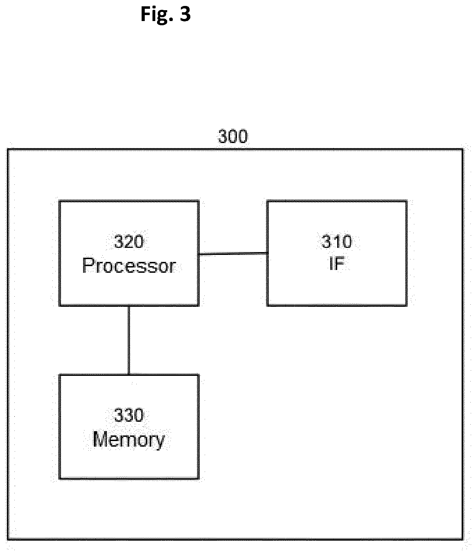

With reference to figure 3, a second embodiment will now be illustrated, relating to a computer program containing instructions which, when executed on a computer, cause the computer to execute the method according to the first embodiment or any optional step thereof, or any method step described herein, also in combination. Figure 3 illustrates a structure of a computer capable of executing such a method on the basis of respective instructions. In particular, figure 3 illustrates a block diagram of a computer 300, which comprises a processor 320, a memory 330, and an interface IF 310, wherein the processor 320 is capable of exchanging data with the memory and with the interface. The interface is moreover capable of exchanging data with external units and/or with a user. The aforesaid instructions can be stored in the memory 330 and executed by the processor 330 as needed. The telemetric data can be provided to the processor via the interface, and optionally stored in the memory 330, although this is not strictly necessary, as the processor can process the data without having to store them in the memory 330, for example in the event that processing on the fly is possible, or by storing only small portions of the data in an internal cache of the processor while they are being received from the outside.

According to a third embodiment, not illustrated, there is provided a medium (for example a flash memory, ROM, RAM or EPROM, in which to store the instructions; or also a wireless signal or a signal transmitted via a cable, which therefore represents a medium capable of transmitting the instructions to an entity that executes them; etc.) suitable for containing instructions configured to execute, by means of a computer (such as the one illustrated in figure 3 for example), one or more of the steps, also in any combination, of the method or methods described herein.

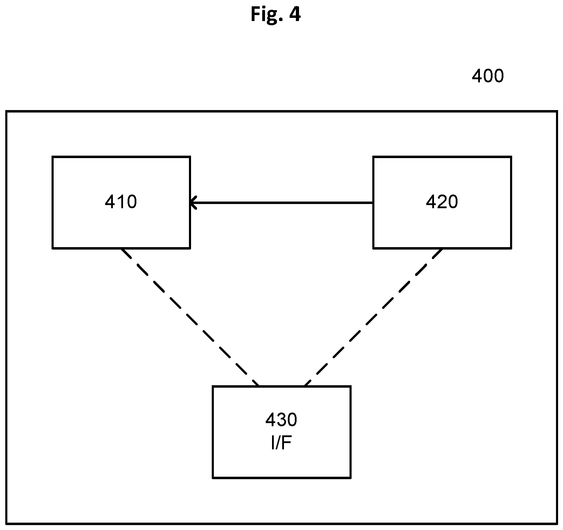

With reference to figure 4, a fourth embodiment will now be described, relating to an apparatus (400) for determining a rank index for a content distribution network, CDN, included in a system comprising a plurality of CDNs and at least one aggregate of addresses associated with users. Such a system can be, for example, as illustrated in figure 1, noting that in fact the system need not necessarily contain multiple aggregates, but rather, in its basic configuration it can contain a single aggregate represented by a number of IP addresses, this number preferably being a subset of the IP addresses/users present in the system. The number can be selected on the basis of a series of parameters, for example in such a way that they are geographically near, and/or show comparable quality (telemetry data), etc. The apparatus 400 comprises an interface 410, and a processor 420. We shall limit ourselves to describing the main aspects; reference may be made to other parts of the description for further details, including optional ones, which are equally applicable to the apparatus 400.

The interface (410) is configured to receive telemetry data relating to services provided, in a given time interval ($\Delta t$), by means of each CDN of the plurality of CDNs (CDN-1 ... CDN-k ... CDN-N), to users of the at least one aggregate of addresses (IP-1 ... IP-q ... IP-Na). Any type of interface can be used, such as, for example a chipset capable of engaging in wireless or optical communication, communication via a coaxial cable, etc. The processor (420) is configured to determine, on the basis of the telemetry data, a set of CDN-aggregate performance indexes (indicated in the examples further below, also with KPI.,.,$\Delta t$) indicating a level of performance shown by a CDN in providing one or more services to users associated with an aggregate of addresses, for each combination of a CDN of said plurality of CDNs and said at least one aggregate of addresses. In other words, performance indexes are calculated for all the combinations between an aggregate and all the CDNs capable of serving the aggregate. A variety of processors or combinations thereof can be used for this purpose, for example a generic processor, an RISC, a DSP, either in a single unit or various components (all situated on a single circuit board or in different interconnected devices, including remote ones), etc. Furthermore, the processor (420) is configured to determine, based on the set of CDN-aggregate performance indexes, a performance rank index (of which KPI*k,q,$\Delta t$ is an example, as illustrated further below) for a given CDN (CDN-k) of the plurality of CDNs with respect to the at least one aggregate of addresses, said rank index indicating a rank level of the CDN-aggregate index of the predetermined CDN relative to the rank indexes CDN-aggregate of said set.

According to a fifth embodiment, there is provided a system comprising an apparatus for determining a rank index according to the third embodiment, and an apparatus for collecting telemetry data. The telemetry apparatus can for example be the apparatus 30 in figure 1. The system is therefore capable of generating a priority list of the various CDNs that serve a given aggregate, and the list can be used for managing users, for example for assigning new requests for services, and/or redistributing the load, etc. The system can optionally comprise a network management device (not illustrated) configured to control the provision of one or more services to one or more users based on the CDN ranking information. The ranking information comprises information indicating the ranking of each CDN of the plurality, and/or a probability for each CDN which indicates the probability that a CDN is used in the control process. This control comprises the allocation of a new user and/or service to a CDN based on the ranking information, and/or the reallocation of a user and/or service to another CDN.

In order to illustrate the operation of the invention and the embodiments thereof, non-limiting examples of the invention will now be taken into consideration. What was said earlier applies for the following examples, and vice versa; repetitions will thus be avoided.

According to one example, the following three steps are envisaged:

> 1. 4 KPIs (key performance indicators) are calculated for each CDN in relation to 4 metrics, based on the data collected, relating to the last five minutes of available data, for a given subclass of IP addresses. Each of the KPIs represents an example of the specific performance index; the four KPIs can be combined to obtain a performance index as illustrated above. The 4 metrics (which can represent examples of QoS parameters) are: available network bandwidth, number of errors, total rebuffering time, and number of rebuffering events. The KPIs can be standardised so as to have values comprised between 0 and 1 (for example by counting how many times the KPI of a CDN-aggregate pair is in a certain relation with respect to other CDN-aggregate pairs). With regard to the information relating to the bitrate, the analysis can also be done in a predictive manner in order to estimate the value of the KPIs in the near future of interest (e.g. 10 minutes) . In the latter case, the data collected relating to the last five minutes for a given subclass of IP addresses are used as input to the predictive model and subsequently standardised;

2. In order to have a single global indicator that evaluates each CDN, the 4 KPIs are combined in a single index (as said earlier, an example of the performance index) by weighting them: 60% bitrate KPI, 10% number of errors KPI, 10% rebuffering time KPI, and 20% number of rebuffering events KPI;

3. From the global indicator for every subclass of IP addresses, for every CDN, one derives the percentage of clients that will be allocated to that CDN (this is an example of the rank indicator described above, or in general of rank information) for that subclass of IP addresses in proportion to the value of the indicator; in the calculation of this percentage, account will also be taken of the difference between active and inactive CDNs.

On the basis of the information obtained, it is therefore possible to allocate new users/services, and/or to reallocate existing ones, in an optimal manner. In particular, the solution as illustrated by the example is capable of optimising the distribution of content by assigning to every user, in real time, the distribution technology that is best, from a quality standpoint, for the delivery of the content itself, thus increasing the probability of a high bitrate and stability thereof, as well as minimising the probability of rebuffering events and errors and improving the general quality of experience. Furthermore, optimising the selection of a CDN enables the best quality of content to be delivered to users, increasing their satisfaction and decreasing the problems tied to retransmissions due to poor quality or, more in general, tied to user dissatisfaction (churn, calls to CRM, etc) .

A detailed example illustrating a possible mathematical design of the ranking and allocation method of the content distribution network (CDN) for routing user requests for content (content that may be enjoyed on a TV, smartphone, tablet, etc.) to the best available CDN is presented below. The general objective is to define a logic based on quality of service (QoS) so as to order the CDNs based on their actual QoS with the aim of allocating clients to the CDNs with the best performance at any given moment and thereby of also improving over-the-top (OTT) service delivery. In the following example, a rank is also provided to CDNs that are not capable of serving a given IP or aggregate of IP; the ranking in any case makes it possible to have a comprehensive view of the behaviour of the whole network. In fact, based on the telemetry (not available for that IP, given that it is not serving addresses in that range) it can be expected that that CDN will be positioned with a low index. Despite this, the ranking thereof makes it possible to have a complete picture of the network in a certain moment in view of possible allocations in different areas/aggregates of addresses, and therefore to have better overall balancing.

1. Illustration of the example

In the present example, the mathematical details and the logic at the basis of the construction of a holistic QoS index are specified in sub-sections 1.1-1.2, and the logic of the allocation of client requests in sub-section 1.3. The first is the main metric used to attribute a score to the various CDNs on the basis of the QoS delivered by them and to rank them, whilst the second is the actual logic of the allocation of client requests to the CDNs once a scored ranking is available.

1.1 Parameterisation of the CDN ranking and assignment algorithm

The CDN ranking and assignment algorithm routes a specific client request originating from a given IP aggregation (for example IP / 20) to the best CDN available. It is based on a series of configurable parameters that govern the weight, direction and quality of the statistical metrics calculated by the body of the algorithm/method. These parameters are:

a) the number and nature of the QoS information items considered in the ranking. This parameter defines which QoS KPIs are used in the ranking (bitrate, errors, rebuffering, etc.);

b) the relative weight of each QoS information item in determining the level of the final QoS index. This parameter allows optimising, for example, the importance of rebuffering events relative to error events;

c) the "correlation" of each QoS information item to the final QoS index. For example, an increase in the average bitrate should positively correlate with the final QoS index, whilst an increase in the number of errors should be negatively correlated with the final QoS index;

d) The delay considered necessary for the extraction of data from the telemetric data recording system (for example, a system known as Cassandra can be used). Let it be assumed, for example, that the time interval between the realisation of a KPI and the registration thereof in the telemetric recording system is 5 minutes; therefore, in the ranking, the method will consider the data only from t-5 (this notation means time t, expressed for example in minutes, optionally sec, etc. minus 5 minutes) backwards when at t (when it is at time t) to give the system the time necessary for producing the data;

e) The calculation time. This is the actual time window in which the index is calculated. For example, if there is a delay of 5 minutes in writing the data into the telemetric system and we want to calculate the index over 3 minutes, the calculation time will be comprised from t-5 to t-7, including both;

f) The recalculation frequency in the ranking. This parameter configures the ranking recalculation frequency (for example every minute);

g) The level of IP aggregation. This parameter allows the desired level of IP aggregation to be configured (for example IP / 20). Hereinafter, we will use "IP aggregation" and "IP" interchangeably for the sake of illustrative clarity.

The timeline in figure 55 illustrates the time windows considered in the ranking for an example parameterisation.

1.2 Design of the holistic QoS metric and CDN ranking

In order to rank the CDNs based on the QoS delivered by them, it is necessary to define an aggregate, global measure of the QoS by combining different information on the QoS. The type of information included in this aggregate measure of QoS refers at present to bitrate events, rebuffering events and errors: we refer to the "final" QoS index as this present selection of QoS information. However, as noted earlier in Sub-section 1.1, the overall algorithm is designed so that it can be expanded in this respect to include further QoS metrics that are available or can be recovered by the telemetry system (for example the start time; it is noted, however, that the invention also works with a single metric, or with any other combination of metrics).

3.2.1 Formulation of the index

The final QoS index (an example of the rank index discussed elsewhere) is a weighted average of the QoS information (an example of the performance indexes discussed elsewhere). The CDNs are therefore ranked from the highest to the lowest based on the value taken on by this final QoS index. Now we shall go through every step of the formulation of the QoS index. Formally, for a given CDN k, a given IP q, a given calculation window $\Delta t$ and a given set of QoS parameters I, the QoS index is given by:

$$Index_{k,q,\Delta t} = \sum_{i=1}^{I} w_i KPI^*_{i,k,q,\Delta t} \qquad (1.1)$$

where $w_i$ is the weight of the i-th QoS parameter and,

$$KPI^*_{i,k,q,\Delta t} = h\left(KPI_{i,k,q,\Delta t}\right) \in [0,1].\qquad (1.2)$$

$$w_i \in [0,1]\ \forall i$$

$$\sum_{i=1}^{I} w_i = 1.$$

Therefore, the final QoS index calculated in (1.1) is comprised between 0 and 1. As explained in sub-section 1.1, the weight of the different KPIs used is one of the parameters of the ranking algorithm. We shall define the current weighting of the KPIs in the paragraphs below. The function h () in the formula (1.2) is a standardisation function used to render the QoS information on different scales comparable by reducing them to between 0 and 1 (for example the number of error events and the rebuffering time have different scales, h () reduces both of them to between 0 and 1). This function is defined as:

$$h\left(KPI_{i,k,q,\Delta t}\right) := \begin{cases} \dfrac{\#\left\{KPI_{i,\bullet,\bullet,\Delta t} < KPI_{i,k,q,\Delta t}\right\}}{n_{i,\bullet,\bullet,\Delta t} - 1} & (A) \\[2em] \dfrac{\#\left\{KPI_{i,\bullet,\bullet,\Delta t} \geq KPI_{i,k,q,\Delta t}\right\} - 1}{n_{i,\bullet,\bullet,\Delta t} - 1} & (B) \end{cases} \qquad (1.4)$$

Equation (1.4) represents an example of counting how many times a performance index of a CDN is measured in relation to a respective performance index of other CDNs. The two cases are applied, respectively: (A) when KPIi is positively correlated with the QoS index (e.g. in the case of bitrate) and (B) when KPIi is negatively correlated with the QoS index (e.g. in the case of rebuffering) . $n_{i, \cdot, \cdot, \Delta t}$ is the number of CDN-IP combinations in $\Delta t$ (the number of $KPI_{is, \cdot, \cdot, \Delta t}$).

Therefore, in case (A) h() is substantially the percentage of times that KPIi in $\Delta t$, for any CDN and any IP, is less than the realisation of KPIi on a given CDN k and a given IP q under examination. The greater this percentage is, the better KPIi has manifested itself on that CDN in that IP compared to the overall population of KPIi's on any CDN and any IP in $\Delta t$. This specification of h() is suitable, for example, for the bitrate, as an increase in the bitrate must be positively correlated with the QoS index.

In case (B), by contrast, h() is the percentage of times that KPIi in $\Delta t$, for any CDN and any IP, is greater than the realisation of KPIi on CDN k and IP q. The lower this percentage is, the better KPIi has been on that CDN in that IP compared to the overall population of KPIi's on any CDN and any IP in $\Delta t$. This specification of h() is suitable, for example, for the rebuffering time, as an increase in the rebuffering time must be negatively correlated with the QoS index.

1.2.2 Calculation of QoS KPIs

An example for constructing every KPIi that contributes to equation (1.1) will now be described. In the present example, the algorithm takes account of three types of bitrate, errors and rebuffering relating to the QoS information. This information is transmitted by a series of "information functions" $\gamma i$ (one for every KPIi) applied on "raw" QoS metrics $m_i$ extracted from every SSTT event by the telemetry system (e.g. Cassandra). When they are applied to the "raw" QoS metrics, these functions return the various KPIi's introduced in Section 1.2.1. In symbols:

$$KPI_{i,k,q,\Delta t} := \gamma_i\left(m_{i,k,q,r}\right) \qquad (1.5)$$

where r is the index of the SSTT row in the example in which the telemetry system is represented by Cassandra.

The first metrics (also raw metrics) $m_i$ considered now in the present example are:

Bitrate, calculated as the ratio between the total number of bytes downloaded and the downloading time;
Number of error events;
Total rebuffering time;
Number of rebuffering events.

Each of the information functions $\gamma i$ (in relation to the metric $m_i$) that produces the different $KPI_{i, k, q, \Delta t}$ used to evaluate the CDN can be defined in a variety of ways.

If there are no data in the telemetry system for a given combination of CDN-IP times, all the corresponding $KPI^{*}_{i, kq, \Delta t}$ for i = 1, ..., I cannot be calculated and the final QoS index will be NA (not available, missing). Details on the functions $\gamma i$ and $m_i$ will be omitted; we observe that the person skilled in the art will be able to choose the appropriate one according to the circumstances and note that the use of such functions is optional, as the method in fact works all the same if they are omitted (for example, the "raw" data can be used directly or processed only marginally with simple correction factors).

1.3 Design of the CDN assignment logic

1.3.1 Proportional allocation

Sub-section 1.1 described the construction of an aggregate QoS index for assigning scores (a rank index) to the CDNs in a given aggregation and time window. Once a ranking is produced, the algorithm must manage the allocation of clients to each CDN by setting the probability (another example of a rank index, i.e. a rank index expressed in probability terms) that a client will be assigned to the first CDN in the ranking, to the second CDN in the ranking and so on. The general method for allocating clients to the CDNs is to give a "probability of assignment" proportional to the strength of the relative QoS index of a CDN compared to the general ranking. In symbols:

$$p_{k,q,\Delta t} = \frac{Index_{k,q,\Delta t}}{\sum_{k=1}^{K} Index_{k,q,\Delta t}} \tag{1.6}$$

so:

$$p_{k,q,\Delta t} \in [0,1] \; \forall k, q, \Delta t$$
$$\sum_{k=1}^{K} p_{k,q,\Delta t} = 1 \tag{1.7}$$

This logic works well when we have telemetry data on every possible CDN for a given IP so as to actually provide a QoS index score to each of them. When this is not the case, the allocation logic must be optimised to give every CDN the possibility of being in the ranking; therefore, managing "active" and "inactive" CDNs becomes important.

1.3.2 Managing "active" and "inactive" CDNs

In some cases, for a given CDN k and a given IP q in Δt, it may occur that there are not any data in the telemetry system (for example Cassandra) for actually producing the index. This could be due to a request for content originating from a new IP or to general technical errors that prevented the data from being recorded in Cassandra. These circumstances essentially render a CDN "inactive" from a ranking perspective (i.e. it was not "active" in the recent past and therefore did not produce telemetry data; hence, no QoS index is calculated). Ideally, this should not discriminate against a CDN by excluding it from the ranking, as it might be the best in terms of QoS. In order to manage it, we statically assign a share of allocation probability to active and inactive CDNs according to table 1.

Table 1 - Probability of allocation of assignments to active CDNs

| Number of Active CDNs | Share of Allocation Probability to Active CDNs | Share of Allocation Probability to Inactive CDNs |
|---|---|---|
| 0 | 0% | 100% |
| 1 | 50% | 50% |
| 2 | 80% | 20% |
| > 2 | 90% | 10% |
| *Equal to number of all CDNs* | 100% | 0% |

Clearly, this implies that (in the most frequent case, there are more than 2 active CDNs):

$$p_{\check{k},q,\Delta t} \in [0,0.9] \; \forall \check{k}, q, \Delta t \wedge \sum_{\check{K}} p_{\check{k},q,\Delta t} = 0.9$$

$$p_{\hat{k},q,\Delta t} \in [0,0.1] \; \forall \hat{k}, q, \Delta t \wedge \sum_{\hat{K}} p_{\hat{k},q,\Delta t} = 0.1 \tag{1.8}$$

$$\check{K} \cup \hat{K} = K$$

where $\check{K}$ is the set of "active" CDNs and K is the set of "inactive" CDNs. Let $n_{\check{k}}$ be the number of active CDNs and $n_{\hat{k}}$ the number of inactive CDNs.

The active CDNs will thus receive an allocation probability proportional to their strength in terms of the QoS index as in Equation (1.8): the sum of these amounts to 0.9 (in the most frequent case, i.e. there are more than 2 active CDNs). The remaining 0.1 is assigned in even proportions to the inactive CDNs: 0.1 to the sole inactive CDN, if there is only one, 0.05 (= 0.1 / 2) to each if there are two inactive CDNs, 0.0333 (= 0.1 / 3) to each CDN if there are three inactive CDNs and so on.

However, this method can result in unfair allocations to inactive CDNs in the event that a probability is assigned which is higher than the probability assigned to the last active CND. In symbols, this occurs when:

$$\max\left(p_{\hat{k},q,\Delta t}\right) > \min\left(p_{\check{k},q,\Delta t}\right) \qquad (1.9)$$

It should be noted that $\mathbf{max(p_{\hat{k},q,\Delta t})} = \boldsymbol{p_{\hat{k},q,\Delta t}}$ for every k, as they are all equal to the share of probability of allocation to inactive CDNs divided by the number of inactive CDNs. A workaround for obtaining a fair CDN allocation consists in distributing among the active CDNs the global quantity $n_{\check{K}} \cdot (\max(p_{\hat{k},q,\Delta t}) - \min(p_{\check{k},q,\Delta t}))$ (i.e. a sort of "unfair surplus") in proportion to their strength in terms of the QoS index and, at the same time, setting the allocation probability of inactive CDNs equal to the allocation probability of the last active CND in the ranking. This "unfair surplus" can be defined as:

$$\varepsilon_{q,\Delta t} = n_{\check{K}} \cdot \left(\max\left(p_{\hat{k},q,\Delta t}\right) - \min\left(p_{\check{k},q,\Delta t}\right)\right) \qquad (1.10)$$

therefore, a fraction of $\varepsilon_{\boldsymbol{q,\Delta t}}$ proportional to its strength in terms of the QoS index is assigned to every active CND.

This means that, for a given active CND $\boldsymbol{\check{k}}$, we add the following quantity to the current allocation probability:

$$\varepsilon_{\check{k},q,\Delta t} \times \frac{Index_{\check{k},q,\Delta t}}{\sum_{\check{k}=1}^{\check{K}} Index_{\check{k},q,\Delta t}} \qquad (1.11)$$

The final assignment of a CDN ranking results from the redistribution of $\varepsilon_{\boldsymbol{q,\Delta t}}$ with respect to the active CDNs and giving inactive CDNs the (same) lowest allocation probability. This ensures that the active CDNs obtain a share of clients that is proportional to their QoS index and always higher than that of inactive CDNs. At the same time, inactive CDNs also have the possibility of obtaining assigned users/clients, producing telemetry data and introducing the active part of the ranking into the subsequent recalculation of the ranking in that IP.

1.4 Example of the operation of the ranking and allocation algorithm

In this sub-section we shall explain the operation of the ranking and allocation algorithm by means of a concrete routing example. In order to provide a detailed presentation of the algorithm, we shall assume that the present date is 12 March and we wish to calculate the ranking of a CDN and its client allocation at 15:18 for clients who arrive from 15:19 to 15:23 (i.e. the algorithm should carry out and publish the ranking in 60 seconds and be run every 4 minutes). Let us further suppose that a 3-minute interval is necessary to write data into Cassandra and make them available for calculation. Furthermore, let us set the time window for calculating the QoS index equal to 5 minutes, i.e. the index on the basis of which the CDNs are evaluated is calculated using available data spanning the last 5 minutes. For the sake of illustrative clarity, let us set the IP granularity of the ranking equal to IP / 20 (however, the algorithm is flexible and may accommodate more granular IP aggregations such as IP / 24, or other values). Let us consider IP / 20 37.227.9 and see how clients will be assigned on this this IP / 20. The weights specified in this example for every QoS KPI are the example ones also discussed above, therefore, 60% for the bitrate, 10% for the number of errors, 10% for the rebuffering time and 20% for rebuffering events of the numbers. Therefore, our assumptions are summarised in table 2.

Table 2 - Parameterisation of the ranking and allocation algorithm in this routing example

| Parameter of the Algorithm | Value in this example |
|---|---|
| Calculation time | h. 15:18, March 12, 2017 |
| Data recording time lag | 3 mins |
| Calculation time window | 5 mins |

(continued)

| Parameter of the Algorithm | Value in this example |
|---|---|
| Validity of the ranking | 4 mins |
| IP granularity | IP /20 |
| $w_{BR}$ | 60% |
| $w_{ERR}$ | 10% |
| $w_{RBT}$ | 10% |
| $w_{RBN}$ | 20% |

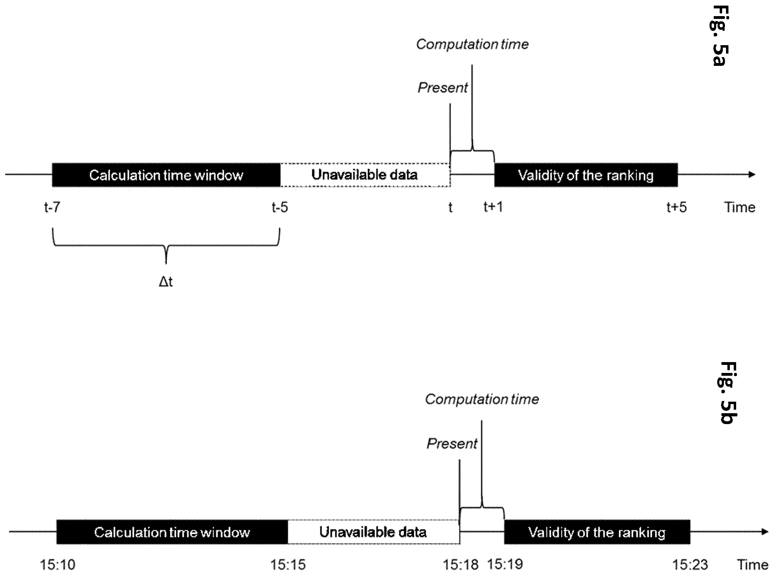

Figure 5b clarifies the time windows considered. Based on the available telemetry data, let us now assume that the following ranking indexes (QoS Index) are produced:

| CDN | Number of SSTT events used in the calculations | QoS Index |
|---|---|---|
| CND-1 | 22 | 0.6630 |
| CDN-2 | 18 | 0.5549 |
| CDN-3 | 46 | 0.5345 |
| CDN-4 | 1 | 0.4000 |
| CDN-5 | 73 | 0.2187 |
| CDN-6 | 0 | NA |

This example presents a case of data not available on CDN-6. The following paragraph will explain the treatment of CDNs without data that allows a fair allocation of clients also to CDNs without data.

1.4.2 Procedures of client allocation to CDNs

Once a CDN ranking is available, the algorithm calculates the probability of assigning a client to each CDN or, alternatively, the fraction of clients obtained by a CDN, based on the QoS index thereof. In this case, CDN-1, CDN-2, CDN-3, CDN-4 and CDN-5 represent "active CDNs", whereas CDN-6 is the only CDN that is "inactive", as no data are available for the timespace IP combination. Therefore, the active CDNs initially obtain a total 90% probability of being assigned to a given client, whereas the remaining 10% is left to the inactive CDN-5. The 90% probability of assignment is distributed among active CDNs in a manner that is proportional to their QoS. For example, OSCDN will have a probability of assignment equal to:

$$p_{AkPriv,37.227.9,15:10:00-15:14:59} \times 0.9 =$$
$$\frac{Index_{AkPriv,37.227.9,15:10:00-15:14:59}}{\sum_{k=1}^{K} Index_{k,q,\Delta t}} \times 0.9 = \frac{0.5549}{2.3711} \times 0.9 = 0.2106 \qquad (1.12)$$

.

The complete redistribution is provided in table 4:

| CDN | Number of SST events used in the calculations | QoS Index | First allocation |
|---|---|---|---|
| CDN-1 | 22 | 0.6630 | 0.2516 |
| CDN-2 | 18 | 0.5549 | 0.2106 |
| CDN-3 | 46 | 0.5345 | 0.2029 |
| CDN-4 | 1 | 0.4000 | 0.1518 |
| CDN-5 | 73 | 0.2187 | 0.0830 |

(continued)

| CDN | Number of SST events used in the calculations | QoS Index | First allocation |
|---|---|---|---|
| CDN-6 | 0 | NA | 0.1000 |

In this case, CDN-6 (the only inactive CDN) obtains a higher probability of first allocation than CDN-5 (the last active CND in the ranking). It is debatable whether this allocation is fair or unfair, as no data was produced by this CDN and therefore we do not have a basis for giving it a probability of assignment based on a higher QoS than an active CDN. In order to make these assignments fair, the algorithm calculates the difference between the first allocation probability of CDN-6 and that of CDN-5, i.e. 0.0170, and sets the two first allocation probabilities of these CDNs equal to each other. The remaining surplus (i.e. Equation (1.10) is redistributed over active CDNs in proportion to their QoS index, in the same manner as Equation (1.11)).

The resulting ranking and the assignment of the assignment, which will be used from 15:19:00 to 15:22:59 of 12 March 2017 is shown in table 5.

| CDN | Number of SST events used in the calculation s | QoS Index | First Allocation | Final Allocation |
|---|---|---|---|---|
| CDN-1 | 22 | 0.6630 | 0.2516 | 0.2564 |
| CDN-2 | 18 | 0.5549 | 0.2106 | 0.2146 |
| CDN-3 | 46 | 0.5345 | 0.2029 | 0.2067 |
| CDN-4 | 1 | 0.4000 | 0.1518 | 0.1547 |
| CDN-5 | 73 | 0.2187 | 0.0830 | 0.0846 |
| CDN-6 | 0 | NA | 0.1000 | 0.0830 |

As noted earlier, the detailed example is only illustrative and provided for the sake of completeness, but it does not limit the invention as defined by the claims.

The devices, apparatus and the components thereof illustrated in the present description can be realised by means of software, hardware, firmware or any combination thereof. Furthermore, such devices, apparatus and the components thereof can be realised in a concentrated manner (i.e. in a single physical entity) or be distributed (for example into multiple physical entities, also remote from one another and interconnected via a network). Furthermore, what has been illustrated for a method applies equally for a corresponding device, computer program, system, signal, and vice versa.

Naturally, the above description of embodiments and examples applying the principles recognised by the inventors is given solely for the purpose of exemplifying such principles and must therefore not be construed as a limitation of the invention or of the teachings set forth herein or which may be derived by the person skilled in the art.

## Claims

1. Method for determining a rank index for a content distribution network, CDN, included in a system comprising a plurality of CDNs (CDN1 ... CDNk) and at least one aggregate of addresses associated with users (S1 ... Sq), wherein the aggregate of addresses represents a subset of all addresses to which a CDN distributes content, the method comprising the steps of:

   - receiving (S110) telemetry data relating to a measurement of quality tied to a provision of one or more services delivered, in a given time interval ($\Delta t$), by means of each CDN of said plurality of CDNs (CDN1 ... CDNk) to users of said at least one aggregate of addresses (S1 ... Sq);
   - determining (S120), based on said telemetry data, a set of CDN-aggregate performance indexes (KPI.,.,$\Delta t$), wherein each CDN-aggregate performance index indicates a level of performance shown by a CDN in providing one or more services to users associated with an aggregate of addresses, and wherein the set of CDN-aggregate performance indexes includes CDN-aggregate performance indexes for each combination of a CDN of said plurality of CDNs and said at least one aggregate of addresses;
   - determining (S130), based on the set of CDN-aggregate performance indexes, a rank index (KPI*k,q,$\Delta t$) for a given CDN (CDNk) of said plurality of CDNs with respect to said at least one aggregate of addresses, said rank index indicating a rank level of the CDN-aggregate index of said predetermined CDN relative to the rank indexes of the CDNs of said plurality of CDNs.

2. Method according to claim 1, wherein said system comprises a plurality of aggregates of addresses, and wherein the step of determining a set of CDN-aggregate performance indexes (KPI.,.,$\Delta$t) comprises determining a set of CDN-aggregate performance indexes for each combination of a CDN of said plurality of CDNs and of each aggregate of said plurality of aggregates of addresses.

3. Method according to one of the preceding claims, wherein determining said rank index comprises determining said rank index on the basis of the number of times that the CDN-aggregate performance index is in a predetermined relationship with respect to each of the CDN-aggregate indexes of said set.

4. Method according to one of the preceding claims, comprising:

   determining (S120) the set of CDN-aggregate performance indexes (KPI.,.,$\Delta$t) includes determining a plurality of specific CDN-aggregate performance indexes (KPIi,.,$\Delta$t), each relating to a respective QoS parameter, wherein
   determining the rank index includes

   determining a plurality of specific rank indexes, each relating to a QoS parameter and on the basis of a respective specific CDN-aggregate performance index, and
   determining the rank index for the given CDN on the basis of said specific rank indexes.

5. Method according to one of the preceding claims, further comprising at least one amongst the steps of:

   - in response to a request to provide a service to a user belonging to an aggregate of addresses, selecting, among the CDNs suitable for providing services to said aggregate, a CDN having a higher rank index than other CDNs suitable for providing services to said aggregate of addresses
   - modifying an allocation of a CDN over time depending on the rank indexes obtained for the CDNs;
   - establishing how many users or a percentage of users can be allocated to a CDN in proportion to the rank index;
   - allocating a user to a CDN by taking into account active and inactive CDNs, where an inactive CDN is a CDN for which updated telemetry data are not available or not sufficiently available.

6. Method according to any one of the preceding claims, wherein said at least one aggregate of addresses contains a number of addresses associated with respective users, and wherein said number is preferably modifiable in correspondence with an event.

7. Method according to one of the preceding claims, further comprising the step of determining that a CDN of said plurality is in an inactive state in correspondence with an absence of respective telemetry data, and wherein the step of determining a rank index comprises determining a rank index for the CDN in an inactive state on the basis of a predetermined value, wherein this predetermined value preferably depends on the total number of CDNs of said plurality of CDNs.

8. Method according to one of the preceding claims, comprising the step of determining a probability of assigning a CDN in an inactive state to a given aggregate of addresses based on a predetermined value, and of determining a probability of assigning each active CDN of said plurality of CDNs by distributing the remaining probability of assignment on the basis of the rank indexes of each active CDN of said plurality of CDNs, wherein a CDN is inactive in correspondence with an absence of respective telemetry data and active in correspondence with a presence of respective data of telemetry.

9. Method according to claim 8, comprising the step of assigning to the inactive CDN an assignment probability level equal to the lowest assignment probability among the active CDNs, and of recalculating the assignment probabilities for the active CDNs, except for the one having the lowest assignment probability, based on the remaining probability.

10. Computer program containing instructions which, when executed on a computer, cause the computer to execute the method according to any one of claims 1 to 9.

11. Apparatus (400) for determining a rank index for a content distribution network, CDN, included in a system comprising a plurality of CDNs (CDN1 ... CDNk) and at least one aggregate of addresses associated with users (S1 ... Sq), wherein the aggregate of addresses represents a subset of all addresses to which a CDN distributes content, the apparatus comprising:

- an interface (410) configured to receive telemetry data relating to a measurement of quality tied to a provision of one or more services provided, in a given time interval ($\Delta t$), by means of each CDN of said plurality of CDNs (CDN1 ... CDNk) to users of said at least one aggregate of addresses (S1 ... Sq) ;
- a processor (420) configured to determine, based on said telemetry data, a set of CDN-aggregate performance indexes (KPI.,.,$\Delta t$), wherein each CDN-aggregate performance index indicates a level of performance shown by a CDN in providing one or more services to users associated with an aggregate of addresses, and wherein the set of CDN-aggregate performance indexes includes CDN-aggregate performance indexes for each combination of a CDN of said plurality of CDNs and said at least one aggregate of addresses;
- wherein the processor (420) is also configured to determine, based on the set of CDN-aggregate performance indexes, a rank index (KPI*k,q,$\Delta t$) for a given CDN (CDNk) of said plurality of CDNs with respect to said at least one aggregate of addresses, said rank index indicating a rank level of the CDN-aggregate index of said predetermined CDN relative to the CDN-aggregate indexes of said set.

12. System comprising an apparatus for determining a rank index according to claim 11, and an apparatus for collecting telemetry data.

## Patentansprüche

1. Verfahren zum Bestimmen eines Rangindexes für ein Inhaltsverteilungsnetzwerk, CDN, das in einem System eingeschlossen ist, das eine Vielzahl von CDNs (CDN1 ... CDNk) und mindestens ein Aggregat von Adressen, die mit Nutzern (S1 ... Sq) assoziiert sind, umfasst, wobei das Aggregat von Adressen eine Teilmenge aller Adressen darstellt, an welche ein CDN Inhalte verteilt, wobei das Verfahren die folgenden Schritte umfasst:

   Empfangen (S110) von Telemetriedaten, die sich auf eine Qualitätsmessung beziehen, die mit einer Bereitstellung eines oder mehrerer Dienste verknüpft ist, die in einem gegebenen Zeitintervall ($\Delta t$) mittels eines jeden CDNs aus der Vielzahl von CDNs (CDN1 ... CDNk) an Nutzer aus dem mindestens einen Aggregat von Adressen (S1 ... Sq) bereitgestellt werden;
   Bestimmen (S120), basierend auf den Telemetriedaten, eines Satzes von CDN-Aggregat-Leistungsindizes (KPI.,.,$\Delta t$), wobei jeder CDN-Aggregat-Leistungsindex ein Leistungsniveau angibt, das von einem CDN beim Bereitstellen eines oder mehrerer Dienste für Nutzer, die mit einem Aggregat von Adressen verbunden sind, erbracht wird, und wobei der Satz von CDN-Aggregat-Leistungsindizes CDN-Aggregat-Leistungsindizes für jede Kombination aus einem CDN aus der Vielzahl von CDNs und des mindestens einen Aggregats von Adressen einschließt;
   Bestimmen (S130), basierend auf dem Satz von CDN-Aggregat-Leistungsindizes, eines Rangindexes (KPI*k,q,$\Delta t$) für ein gegebenes CDN (CDNk) aus der Vielzahl von CDNs in Bezug auf das mindestens eine Aggregat von Adressen, wobei der Rangindex ein Rangniveau des CDN-Aggregat-Indexes des vorab bestimmten CDNs relativ zu den Rangindizes der CDNs der Vielzahl von CDNs angibt.

2. Verfahren nach Anspruch 1, wobei das System eine Vielzahl von Aggregaten von Adressen umfasst, und wobei der Schritt des Bestimmens eines Satzes von CDN-Aggregat-Leistungsindizes (KPI.,.,$\Delta t$) das Bestimmen eines Satzes von CDN-Aggregat-Leistungsindizes für jede Kombination aus einem CDN aus der Vielzahl von CDNs und jedem Aggregat aus der Vielzahl von Aggregaten von Adressen umfasst.

3. Verfahren nach einem der vorhergehenden Ansprüche, wobei Bestimmen des Rangindexes das Bestimmen des Rangindexes auf der Grundlage der Anzahl von Malen umfasst, in welchen der CDN-Aggregat-Leistungsindex in einem vorab bestimmten Verhältnis in Bezug auf jeden der CDN-Aggregat-Indizes aus diesem Satz steht.

4. Verfahren nach einem der vorhergehenden Ansprüche, umfassend:

   Bestimmen (S120) des Satzes von CDN-Aggregat-Leistungsindizes (KPI.,.,$\Delta t$), umfassend Bestimmen einer Vielzahl von spezifischen CDN-Aggregat-Leistungsindizes (KPIi,.,$\Delta t$), die sich jeweils auf einen entsprechenden QoS-Parameter beziehen,
   Bestimmen des Rangindexes, umfassend

Bestimmen einer Vielzahl von spezifischen Rangindizes, die sich jeweils auf einen QoS-Parameter beziehen, auf der Grundlage eines jeweiligen spezifischen CDN-Aggregat-Leistungsindexes, und

Bestimmen des Rangindexes für das gegebene CDN auf der Grundlage der spezifischen Rangindizes.

5. Verfahren nach einem der vorhergehenden Ansprüche, weiter umfassend mindestens einen der folgenden Schritte:

- Auswählen, als Antwort auf eine Anforderung, einen Dienst für einen Nutzer bereitzustellen, der zu einem Aggregat von Adressen gehört, unter den CDNs, die für die Bereitstellung von Diensten für die Gruppe geeignet sind, eines CDNs mit einem höheren Rangindex als andere CDNs, die für die Bereitstellung von Diensten für das Aggregat von Adressen geeignet sind

- Modifizieren einer Zuweisung eines CDNs im Laufe der Zeit in Abhängigkeit von den für die CDNs ermittelten Rangindizes;

- Festlegen, wie viele Nutzer oder was für ein Prozentsatz von Nutzern einem CDN im Verhältnis zum Rangindex zugewiesen werden können;

- Zuweisen eines Nutzers zu einem CDN unter Berücksichtigung aktiver und inaktiver CDNs, wobei ein inaktives CDN ein CDN ist, für das aktualisierte Telemetriedaten nicht oder nicht ausreichend verfügbar sind.

6. Verfahren nach einem der vorhergehenden Ansprüche, wobei das mindestens eine Aggregat von Adressen eine Anzahl von Adressen enthält, die mit entsprechenden Nutzern assoziiert sind, und wobei die Anzahl vorzugsweise in Übereinstimmung mit einem Ereignis modifizierbar ist.

7. Verfahren nach einem der vorhergehenden Ansprüche, weiter umfassend den Schritt des Bestimmens, dass sich ein CDN aus der Vielzahl in einem inaktiven Zustand befindet, in Übereinstimmung mit einer Abwesenheit entsprechender Telemetriedaten, und wobei der Schritt des Bestimmens eines Rangindexes das Bestimmen eines Rangindexes für das CDN in einem inaktiven Zustand auf der Basis eines vorab bestimmten Wertes umfasst, wobei dieser vorab bestimmte Wert vorzugsweise von der Gesamtzahl der CDNs aus der Vielzahl von CDNs abhängt.

8. Verfahren nach einem der vorhergehenden Ansprüche, umfassend den Schritt des Bestimmens einer Wahrscheinlichkeit der Zuweisung eines CDNs in einem inaktiven Zustand zu einem gegebenen Aggregat von Adressen auf der Grundlage eines vorab bestimmten Wertes, und des Bestimmens einer Wahrscheinlichkeit der Zuweisung jedes aktiven CDNs aus der Vielzahl von CDNs durch Verteilen der verbleibenden Wahrscheinlichkeit der Zuweisung auf der Grundlage der Rangindizes eines jeden aktiven CDNs aus der Vielzahl von CDNs, wobei ein CDN in Übereinstimmung mit einer Abwesenheit entsprechender Telemetriedaten inaktiv und in Übereinstimmung mit einer Anwesenheit entsprechender Telemetriedaten aktiv ist.

9. Verfahren nach Anspruch 8, umfassend den Schritt des Zuweisens eines Zuweisungswahrscheinlichkeitsniveaus, das gleich der niedrigsten Zuweisungswahrscheinlichkeit unter den aktiven CDNs ist, an das inaktive CDN, und des Neuberechnens der Zuweisungswahrscheinlichkeiten für die aktiven CDNs, mit Ausnahme desjenigen, welches die niedrigste Zuweisungswahrscheinlichkeit aufweist, auf der Grundlage der verbleibenden Wahrscheinlichkeit.

10. Computerprogramm, umfassend Anweisungen, die, wenn sie auf einem Computer ausgeführt werden, den Computer veranlassen, das Verfahren nach einem der Ansprüche 1 bis 9 auszuführen.

11. Vorrichtung (400) zum Bestimmen eines Rangindexes für ein Inhaltsverteilungsnetzwerk, CDN, das in einem System eingeschlossen ist, das eine Vielzahl von CDNs (CDN1 ... CDNk) und mindestens ein Aggregat von Adressen, die mit Nutzern (S1 ... Sq) assoziiert sind, umfasst, wobei das Aggregat von Adressen eine Teilmenge aller Adressen darstellt, an welche ein CDN Inhalte verteilt, wobei die Vorrichtung umfasst:

- eine Schnittstelle (410), die konfiguriert ist, um Telemetriedaten zu empfangen, die sich auf eine Qualitätsmessung beziehen, die mit einer Bereitstellung eines oder mehrerer Dienste verknüpft ist, die in einem gegebenen Zeitintervall ($\Delta t$) mittels eines jeden CDNs aus der Vielzahl von CDNs (CDN1 ... CDNk) an Nutzer aus dem mindestens einen Aggregat von Adressen (S1 ... Sq) bereitgestellt werden;

- einen Prozessor (420), der konfiguriert ist, um auf der Grundlage der Telemetriedaten einen Satz von CDN-Aggregat-Leistungsindizes ($KPI_{.,.,\Delta t}$) zu bestimmen, wobei jeder CDN-Aggregat-Leistungsindex ein Leistungsniveau angibt, das von einem CDN beim Bereitstellen eines oder mehrerer Dienste für Nutzer, die mit einem Aggregat von Adressen verbunden sind, erbracht wird, und wobei der Satz von CDN-Aggregat-Leistungsindizes CDN-Aggregat-Leistungsindizes für jede Kombination aus einem CDN aus der Vielzahl von CDNs und des mindestens einen Aggregats von Adressen enthält;

- wobei der Prozessor (420) weiterhin konfiguriert ist, um auf der Grundlage des Satzes von CDN-Aggregat-Leistungsindizes einen Rangindex (KPI*k,q,Δt) für ein gegebenes CDN (CDNk) aus der Vielzahl von CDNs in Bezug auf das mindestens eine Aggregat von Adressen zu bestimmen, wobei der Rangindex ein Rangniveau des CDN-Aggregat-Indexes des vorab bestimmten CDNs relativ zu den CDN-Aggregat-Indizes des Satzes angibt.

**12.** System, umfassend eine Vorrichtung zum Bestimmen eines Rangindexes nach Anspruch 11 und eine Vorrichtung zum Erfassen von Telemetriedaten.

## Revendications

**1.** Procédé de détermination d'un indice de classement pour un réseau de distribution de contenu, CDN, inclus dans un système comprenant une pluralité de CDN (CDN1 ... CDNk) et au moins un agrégat d'adresses associées à des utilisateurs (S1 ... Sq), dans lequel l'agrégat d'adresses représente un sous-ensemble de la totalité des adresses auxquelles un CDN distribue du contenu, le procédé comprenant les étapes suivantes :

- recevoir (S110) des données télémétriques relatives à une mesure de qualité liée à la prestation d'un ou de plusieurs service(s) fourni(s), dans un intervalle de temps donné (Δt), au moyen de chaque CDN parmi ladite pluralité de CDN (CDN1 ... CDNk) aux utilisateurs d'au moins un agrégat d'adresses (S1 ... Sq) ;
- déterminer (S120), sur la base desdites données de télémétrie, un ensemble d'indices de performance agrégat-CDN (KPI.,.,Δt), dans lequel chaque indice de performance CDN-agrégat indique un niveau de performance affiché par un CDN en fournissant un ou plusieurs service(s) aux utilisateurs associés à un agrégat d'adresses, et dans lequel l'ensemble d'indices de performance CDN-agrégat comprend des indices de performance CDN-agrégat pour chaque combinaison d'un CDN parmi ladite pluralité de CDN et dudit au moins un agrégat d'adresses ;
- déterminer (S130), sur la base de l'ensemble d'indices de performance CDN-agrégat, un indice de classement (KPI*k,q,Δt) pour un CDN donné (CDNk) parmi ladite pluralité de CDN par rapport audit au moins un agrégat d'adresses, ledit indice de classement indiquant un niveau de classement de l'indice CDN-agrégat dudit CDN prédéterminé par rapport aux indices de classement des CDN parmi ladite pluralité de CDN.

**2.** Procédé selon la revendication 1, dans lequel ledit système comprend une pluralité d'agrégats d'adresses, et dans lequel l'étape de détermination d'un ensemble d'indices de performance CDN-agrégat (KPI.,.,Δt) comprend la détermination d'un ensemble d'indices de performance CDN-agrégat pour chaque combinaison d'un CDN parmi ladite pluralité de CDN et de chaque agrégat parmi ladite pluralité d'agrégats d'adresses.

**3.** Procédé selon l'une quelconque des revendications précédentes, dans lequel la détermination de l'indice de classement comprend la détermination de l'indice de classement sur la base du nombre de fois où l'indice de performance CDN-agrégat se trouve dans une relation prédéterminée par rapport à chacun des indices CDN-agrégat de l'ensemble.

**4.** Procédé selon l'une quelconque des revendications précédentes, comprenant :

la détermination (S120) de l'ensemble d'indices de performance CDN-agrégat (KPI.,.,Δt) comprend la détermination d'une pluralité d'indices de performance CDN-agrégat spécifiques (KPIi,.,Δt), chacun se rapportant à un paramètre QdS (qualité de service) respectif, dans lequel
la détermination de l'indice de classement comprend :

la détermination d'une pluralité d'indices de classement spécifiques, chacun se rapportant à un QdS et sur la base d'un indice de performance agrégat-CDN spécifique respectif, et
la détermination de l'indice de classement pour le CDN donné sur la base desdits indices de classement spécifiques.

**5.** Procédé selon l'une quelconque des revendications précédentes, comprenant en outre au moins une des étapes suivantes :

- en réponse à une demande de fourniture d'un service à un utilisateur appartenant à un agrégat d'adresses, sélectionner, parmi les CDN aptes à fournir des services audit agrégat, un CDN qui affiche un indice de classement plus élevé que les autres CDN aptes à fournir des services auditt agrégat d'adresses ;
- modifier l'attribution d'un CDN au fil du temps en fonction des indices de classement obtenus pour les CDN ;
- déterminer le nombre d'utilisateurs ou un pourcentage d'utilisateurs pouvant être alloués à un CDN en fonction de l'indice de classement ;
- attribuer un utilisateur à un CDN en tenant compte des CDN actifs et inactifs, un CDN inactif étant un CDN pour lequel les données télémétriques actualisées ne sont pas disponibles voire pas suffisamment disponibles.

6. Procédé selon l'une quelconque des revendications précédentes, dans lequel ledit au moins un agrégat d'adresses contient un nombre d'adresses associées à des utilisateurs respectifs, et dans lequel ce nombre est de préférence modifiable en fonction d'un événement.

7. Procédé selon l'une quelconque des revendications précédentes, comprenant en outre l'étape consistant à déterminer qu'un CDN parmi ladite pluralité se trouve dans un état inactif en correspondance avec l'absence de données télémétriques respectives, et dans lequel l'étape consistant à déterminer un indice de classement comprend la détermination d'un indice de classement pour le CDN se trouvent dans un état inactif sur la base d'une valeur prédéterminée, dans lequel ladite valeur prédéterminée dépend de préférence du nombre total de CDN composant ladite pluralité de CDN.

8. Procédé selon l'une quelconque des revendications précédentes, comprenant l'étape consistant à déterminer une probabilité d'attribution d'un CDN se trouvant dans un état inactif à un agrégat d'adresses donné sur la base d'une valeur prédéterminée, et à déterminer une probabilité d'attribution de chaque CDN actif parmi ladite pluralité de CDN en répartissant la probabilité d'attribution restante sur la base des indices de classement de chaque CDN actif parmi ladite pluralité de CDN, dans lequel un CDN est inactif en correspondance avec une absence de données de télémétrie respectives et est actif en correspondance avec une présence de données de télémétrie respectives.

9. Procédé selon la revendication 8, comprenant l'étape consistant à attribuer au CDN inactif un niveau de probabilité d'attribution qui est égal à la probabilité d'attribution la plus faible parmi les CDN actifs, et à recalculer les probabilités d'attribution pour les CDN actifs, à l'exception de celui qui présente la probabilité d'attribution la plus faible, sur la base de la probabilité restante.

10. Programme d'ordinateur contenant des instructions qui, lorsqu'elles sont exécutées sur un ordinateur, amènent l'ordinateur à exécuter le procédé selon l'une quelconque des revendications 1 à 9.

11. Appareil (400) permettant de déterminer un indice de classement pour un réseau de distribution de contenu (CDN) inclus dans un système comprenant une pluralité de CDN (CDN1 ... CDNk) et au moins un agrégat d'adresses associées à des utilisateurs (S1 ... Sq), dans lequel l'agrégat d'adresses représente un sous-ensemble de la totalité des adresses auxquelles un CDN distribue du contenu, l'appareil comprenant :

- une interface (410) configurée de manière à recevoir des données télémétriques relatives à une mesure de qualité liée à la prestation d'un ou plusieurs service(s) fourni(s), dans un intervalle de temps donné ($\Delta$t), au moyen de chaque CDN parmi ladite pluralité de CDN (CDN1 ... CDNk) aux utilisateurs d'au moins un agrégat d'adresses (S1 ... Sq) ;
- un processeur (420) configuré de manière à déterminer, sur la base desdites données de télémétrie, un ensemble d'indices de performance CDN-agrégat (KPI.,.,$\Delta$t), dans lequel chaque indice de performance CDN-agrégat indique un niveau de performance affiché par un CDN lors de la fourniture d'un ou plusieurs service(s) aux utilisateurs associés à un agrégat d'adresses, et dans lequel l'ensemble d'indices de performance CDN-agrégat comprend des indices de performance CDN-agrégat pour chaque combinaison d'un CDN parmi ladite pluralité de CDN et dudit au moins un agrégat d'adresses ;
- dans lequel le processeur (420) est également configuré de manière à déterminer, sur la base de l'ensemble d'indices de performance CDN-agrégat, un indice de classement (KPI*k,q,$\Delta$t) pour un CDN donné (CDNk) parmi ladite pluralité de CDN par rapport audit au moins un agrégat d'adresses, ledit indice de classement indiquant un niveau de classement de l'indice CDN-agrégat dudit CDN prédéterminé par rapport aux indices CDN-agrégat de l'ensemble.

12. Système comprenant un appareil pour déterminer un indice de classement selon la revendication 11, et un appareil de collecte de données télémétriques.

**Fig. 1**

**Fig. 2**

**Fig. 3**

300

320
Processor

310
IF

330
Memory

**Fig. 4**

400

410 ← 420

430
I/F

**Fig. 5a**

Computation time

Present

Validity of the ranking

Unavailable data

Calculation time window

Time

t+5

t+1

t

t-5

t-7

Δt

**Fig. 5b**

Computation time

Present

Validity of the ranking

Unavailable data

Calculation time window

Time

15:23

15:19

15:18

15:15

15:10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 108270828 A
- US 8874964 B1

- EP 2027536 A2